# EUROPÄISCHE PATENTANMELDUNG

(11) **EP 4 036 532 A1**
(43) Veröffentlichungstag der Anmeldung: **03.08.2022**
(21) Anmeldenummer: 21154285.7
(22) Anmeldetag: 29.01.2021
(51) Int. Cl.: G01F 23/284

(54) **3D-FÜLLSTANDMESSUNG IN GROSSEN BEHÄLTERN UND HALDEN**

(71) Anmelder: VEGA Grieshaber KG, 77709 Wolfach (DE)
(72) Erfinder: GARCIA, Juan, 77781 Biberach (DE); HÖLL, Ralf, 79822 Titisee-Neustadt (DE)
(74) Vertreter: Maiwald Patent- und Rechtsanwaltsgesellschaft mbH

(57) **Zusammenfassung**

Verfahren zur 3D-Füllstandmessung oder Topologiemessung in einem großen Behälter oder einer Schüttguthalde mittels 3D-Füllstandmessgeräten, die als Primary und Secondary 3D-Füllstandmessgeräte untereinander vernetzt sind.

## Beschreibung

### Gebiet der Erfindung

Die Erfindung betrifft die Messung von Füllständen und Oberflächentopologien, die insbesondere bei der Schüttgutmessung auftreten. Insbesondere betrifft die Erfindung ein Verfahren zur 3D-Füllstandmessung oder Topologiemessung in einem großen Behälter oder einer Schüttguthalde, einen 3D-Füllstandsensor, ein Füllstandmesssystem, ein Programmelement und ein computerlesbares Medium.

### Technischer Hintergrund

Füllgüter, insbesondere Schüttgüter, welche in großen Behältern oder auf Schüttguthalden nach Befüllung gelagert werden, weisen in aller Regel eine sehr unregelmäßige, unebene Oberfläche auf. Je nach Fülleinlassverfahren, zum Beispiel mit fahrbaren Förderbändern, welche die Halde von einem Ende zum anderen Ende beim Füllen befahren, entstehen Unregelmäßigkeiten in der Oberfläche des Füllguts, die sich auch zu auffälligen Schüttkegeln auftürmen können. Beim Abziehen des Füllguts können andererseits auch ein oder mehrere Abzugstrichter im Verlauf der Oberfläche auftreten. Ob Schüttgutkegel oder Abzugstrichter, diese können plötzlich brechen und die Topologie über eine größere zu messende Fläche verändern, so dass sprunghafte Messergebnisse oder hohe Messfehler bei deren Füllstandmessung entstehen können. Auch können die Schüttgutkegel oder Abzugstrichter, bzw. auch Anhaftungen, eine zusätzliche Belastung für Behälter bedeuten, so dass diese auch brechen oder "aufreißen" können.

### Zusammenfassung

Es ist eine Aufgabe der vorliegenden Erfindung, die Messung von Füllständen oder Topologien und der daraus resultierenden Volumina in großen Behältern oder Schüttguthalden zu verbessern.

Diese Aufgabe wird durch die Merkmale der unabhängigen Patentansprüche gelöst. Weiterbildungen der Erfindung ergeben sich aus den Unteransprüchen und der folgenden Beschreibung von Ausführungsformen.

Ein erster Aspekt der vorliegenden Offenbarung betrifft ein Verfahren zur dreidimensionalen (3D) Füllstandmessung und/oder zur Topologiemessung, insbesondere in großen Behältern oder Schüttguthalden. Es werden 3D-Füllstandmessdaten in einem ersten Bereich erfasst, und zwar durch einen ersten 3D-Füllstandsensor, der im Folgenden auch als Sensor oder 3D-Füllstandmessgerät bezeichnet wird. Gleichzeitig, davor oder danach werden weitere 3D-Füllstandmessdaten erfasst, und zwar in mindestens einem zweiten Bereich durch mindestens einen zweiten 3D-Füllstandsensor, der im Folgenden auch als Sensor oder 3D-Füllstandmessgerät bezeichnet wird.

Aus diesen ganzen erfassten 3D-Füllstandmessdaten wird dann die Topologie der Füllgutoberfläche und/oder des Volumens des Schüttguts im ersten Bereich und dem mindestens einen zweiten Bereich berechnet.

Der erste Bereich und der zweite Bereich können einander überlappen. In diesem Fall ist das Verfahren eingerichtet, den Überlappungsbereich zu erkennen und bei der Topologieberechnung ein Stitching-Verfahren durchzuführen, so dass der überlappende Bereich nicht doppelt verwendet wird.

Gemäß einer weiteren Ausführungsform können der erste und/oder der mindestens zweite 3D-Füllstandsensor während der Topologiemessung beziehungsweise der 3D-Füllstandmessung bewegt oder verfahren werden.

Das Verfahren kann insbesondere zur Prozessautomatisierung im industriellen, kommunalen oder privaten Umfeld verwendet werden.

Es wird ein Verfahren für den Bereich der Prozess- und Fabrikautomatisierung bereitgestellt, mit welchem mittels 3D-Füllstandmessgeräten, die als "Primary" und "Secondary" 3D-Füllstandmessgeräte untereinander vernetzt sind, höhere Genauigkeiten und höhere Sicherheit bei der Füllstandsmessung von großen Behältern bzw. Haldenmessungen ermöglicht wird. Insbesondere ist das Verfahren geeignet zur Erfassung der Topologie der Füllgutoberfläche (oft auch als Oberflächenkontur bezeichnet) und darüber hinaus, durch entsprechende Skalierung mittels Behälter-/Tank-/Silo-/Bunker-/... oder Haldengeometrie (von nun ab nur noch der Einfachheit mit Halde bezeichnet), resultierenden Volumeninhaltsmessungen.

Die Berechnung des Gesamtfüllstandes erfolgt je nach Ausführungsform beim "Primary" Füllstandmessgerät oder in einer nachgeschalteten Steuereinheit (z.B. SPS, PLS, Scada-System, Regelprogramm...) oder zentral, cloudbasiert auf einem übergeordneten Server.

Insbesondere kann, gemäß einer Ausführungsform, erkannt werden, wenn die beiden Bereiche nicht überlappen und in diesem Fall wird der eine Sensor etwas näher zu dem anderen Sensor hin verfahren, so dass es zu einer geeigneten Überlappung kommt, so dass letztendlich die gesamte Schüttgutoberfläche vermessen werden kann.

Gemäß einer weiteren Ausführungsform der vorliegenden Offenbarung erfolgt das Berechnen der Topologie der Füllgutoberfläche beziehungsweise des Füllstands oder des Volumens des Schüttguts ganz oder zumindest teilweise durch den ersten 3D-Füllstandsensor, den sogenannten "Primary" Füllstandsensor.

Gemäß einer weiteren Ausführungsform erfolgt das Berechnen der Topologie der Füllgutoberfläche, des Füllstands und/oder des Volumens ganz oder zumindest teilweise durch eine nachgeschaltete Steuereinheit, an die der erste 3D-Füllstandsensor angeschlossen ist.

Gemäß einer weiteren Ausführungsform der vorliegenden Offenbarung erfolgt das Berechnen der Topologie der Füllgutoberfläche, des Volumens und/oder des Füllstands ganz oder zumindest teilweise durch eine Cloud.

Insbesondere kann das Verfahren zum Erkennen einer Kernflussentstehung durch Analyse der Topologie eingerichtet sein

Kernflussentstehung passiert typischerweise beim Abtragen vom Material, in der Regel unterhalb des gelagerten Materials durch ein gesteuertes Auslassventil / -mechanik. Durch die ständige Füllstandsmessung mit den 3D-Sensoren kann die Topologie des Schüttguts überwacht werden. Wenn die Topologie sich in einer dafür typischen Art ändert (z.B. Ansatz einer Trichterbildung), kann das System das erkennen und Maßnahmen treffen. Die dafür typische Kennlinie könnte im 3D-Sensor oder nachgeschaltete Steuereinheit oder Server als Referenz hinterlegt sein.

Dies dient der rechtzeitigen Vermeidung von Schachtbildungen beim Abfluss. Außerdem wird die Anlagensicherheit und -verfügbarkeit mit Schutz für Mensch und Umwelt verbessert, insbesondere durch zusätzliche Silo-, Behälter-, Bunker- oder Haldendiagnoseinformationen im Sinne einer vorbeugenden Wartung zur Problemerkennung und -vermeidung.

Gemäß einer weiteren Ausführungsform der vorliegenden Offenbarung erfolgt das Messen der Position des ersten und/oder des mindestens einen zweiten 3D-Füllstandsensors relativ zueinander und/oder relativ zum Behälter.

Diese Relativpositionen werden bei der Berechnung der Topologie hinzugezogen.

Gemäß einer weiteren Ausführungsform der vorliegenden Offenbarung ist ein 3D-Füllstandsensor zur 3D-Füllstandmessung und/oder Topologiemessung in einem großen Behälter oder einer Schüttguthalde angegeben, der eingerichtet ist zur Durchführung des oben und im Folgenden beschriebenen Verfahrens.

Gemäß einer weiteren Ausführungsform handelt es sich bei dem 3D-Füllstandsensor um einen Radarsensor, einen Ultraschallsensor oder einen Lasersensor.

Gemäß einer weiteren Aspekt der vorliegenden Offenbarung ist ein Füllstandmesssystem zur 3D-Füllstandmessung und/oder Topologiemessung in einem großen Behälter oder einer Schüttguthalde angegeben, welches eine Vielzahl der oben und im Folgenden beschriebenen 3D-Füllstandsensoren aufweist.

Ein weiterer Aspekt der vorliegenden Offenbarung betrifft ein Programmelement, das, wenn es auf einem Prozessor eines Füllstandmesssystems ausgeführt wird, das Füllstandmesssystem dazu veranlasst, die oben und im Folgenden beschriebenen Schritte durchzuführen.

Ein weiterer Aspekt betrifft ein computerlesbares Medium, auf dem ein oben beschriebenes Programmelement gespeichert ist.

Im Folgenden werden mit Verweis auf die Figuren weitere Ausführungsformen beschrieben. Die Darstellungen in den Figuren sind schematisch und nicht maßstäblich. Werden in den Figuren gleiche Bezugszeichen verwendet, so bezeichnen diese gleiche oder ähnliche Elemente.

### Kurze Beschreibung der Figuren

Fig. 1 zeigt einen Behälter mit einem Füllstandmesssystem gemäß einer Ausführungsform.
Fig. 2 zeigt eine Draufsicht auf den Behälter der Fig. 1.
Fig. 3 zeigt eine Seitenansicht des Behälters der Fig. 1.
Fig. 4 zeigt einen Behälter mit einem Einfüllkegel und einem Auslasstrichter.
Fig. 5 zeigt ein Füllstandmesssystem gemäß einer Ausführungsform.
Fig. 6 zeigt einen länglichen Bunker oder eine längliche Halde mit einem Schienensystem gemäß einer Ausführungsform.
Fig. 7 zeigt eine Draufsicht auf ein kreisförmiges Silo gemäß einer Ausführungsform.
Fig. 8 zeigt ein Flussdiagramm eines Verfahrens gemäß einer Ausführungsform.

### Detaillierte Beschreibung von Ausführungsformen

Füllgüter, insbesondere Schüttgüter, welche in großen Behälter oder auf Schüttguthalden gelagert werden, weisen in aller Regel eine sehr unregelmäßige, unebene Oberfläche auf. Je nach Fülleinlassverfahren, zum Beispiel mit fahrbaren Förderbänder, welche die Halde von einem Ende zum anderen Ende beim Füllen befahren, entstehen Unregelmäßigkeiten in der Oberfläche des Füllguts die sich auch zu auffälligen Schüttgutkegeln auftürmen können. Beim Abziehen des Füllguts können andererseits auch ein oder mehrere Abzugstrichter im Verlauf der Oberfläche auftreten. Ob Schüttgutkegel oder Abzugstrichter, diese können plötzlich brechen und die Topologie über eine größere zu messende Fläche verändern, so dass einzeln messende Sensoren sprunghafte und mit höheren Messfehler, die Messungen durchführen.

Bei dem klassischen, einzelnen 2D-Füllstandmessgerät, das lediglich einen ebenen kleinen Bereich der zu messenden Oberfläche betrachtet, kann somit ein beträchtlicher Messfehler auftreten, da nur ein kleines Segment, innerhalb der Halde, zweidimensional vermessen wird. Ebenso können modernere 3D-Füllstandmessgeräte, wenn diese einzeln betrieben werden, nur eine limitierte dreidimensionale "Fläche mal Höhe" innerhalb der Halde messen. Dadurch wird zwar gegenüber dem 2D-Verfahren das Ergebnis der Füllstandsmessung der Halde genauer. Trotzdem kann dieses aufgrund der großen Lager- bzw. Befüllfläche weiterhin fehlerbehaftet sein. Umso größer die zu messende Halde ist, desto größer kann der Messfehler werden. Das Vermessen der Oberfläche kann unter Zugrundenahme der Behälter- bzw. Haldengeometrie zur Linearisierung verwendet werden, um eine Skalierung durchzuführen, so dass letztendlich das Volumen dieser Messung visualisiert oder an übergeordnete Systeme weitergegeben werden kann.

Der 3D-Füllstandsensor, im Folgenden auch als 3D-Füllstandmessgerät oder 3D-Füllstandscanner bezeichnet, bildet beispielsweise mit Hilfe von Impulsen mit niedriger Intensität die genaue, dreidimensionale Form des Inhalts eines Tanks oder eines anderen Behälters ab. Dieses Messprinzip kann in fast allen Fällen eine sehr genaue Füllstandsmessung innerhalb der Umgebung des Radarstrahls ermöglichen. Das 3D-Füllstandmessgerät bietet einen besseren Überblick über den Füllstand und eine einfache und genauere Möglichkeit, das Volumen des Produkts zu berechnen. Über die Zeit auftretende Ablagerungen an der Behälter- oder Haldenwand können für das klassische 2D-Füllstandmessgerät ein Problem darstellen. Beim 3D-Füllstandmessgerät sieht man wie das Produkt gelagert wird und ob sich in der Behälterwand Ablagerungen anreichern. Somit ist die Erkennung der nicht gewünschten Ablagerungen besser. Dies führt zu weniger Problemen als das 2D-Verfahren.

Ausführungsformen der vorliegenden Offenbarung betreffen ein effizientes, flexibles 3D-Füllstandmessgerät, das vernetzt mit weiteren 3D-Füllstandssmessgeräten eine höhere Genauigkeit in der Füllstandsmessung bei großen Behältern bzw. Haldenmessungen bieten kann. Dabei erfolgt die Erfassung des topologischen Gesamtfüllstands über ein "Primary" 3D-Füllstandmessgerät an welches mindestens ein weiteres "Secondary" 3D-Füllstandmessgerät angeschlossen ist. Die Anzahl der angeschlossenen "Secondary" Füllstandmessgeräte hängt von dem Bedarf ab, der bedingt wird durch die zu messende topologische Struktur getreu dem Motto, je größer und weitläufiger, desto mehr verschaltete 3D-Füllstandmessgeräte (quasi in Kaskade) werden benötigt, um einen geforderten Genauigkeitsgrad zu erfüllen.

Die Anordnung weist mindestens ein "Primary" 3D-Füllstandmessgerät und "n" "Secondary" 3D-Füllstandmessgerät(e) auf, wobei "n" eine Zahl größer 1 ist. Der Einsatzbereich der jeweiligen 3D-Füllstandmessgeräte (Primary oder Secondary) erfolgt, abhängig vom Gerät mit entsprechender Antennenaustrahlung, im geeigneten Abstand zueinander, so dass zum einem eine gegenseitige Störung vermieden wird und zum anderem die Ausleuchtung der Gesamtoberfläche bestmöglich gewährleistet wird.

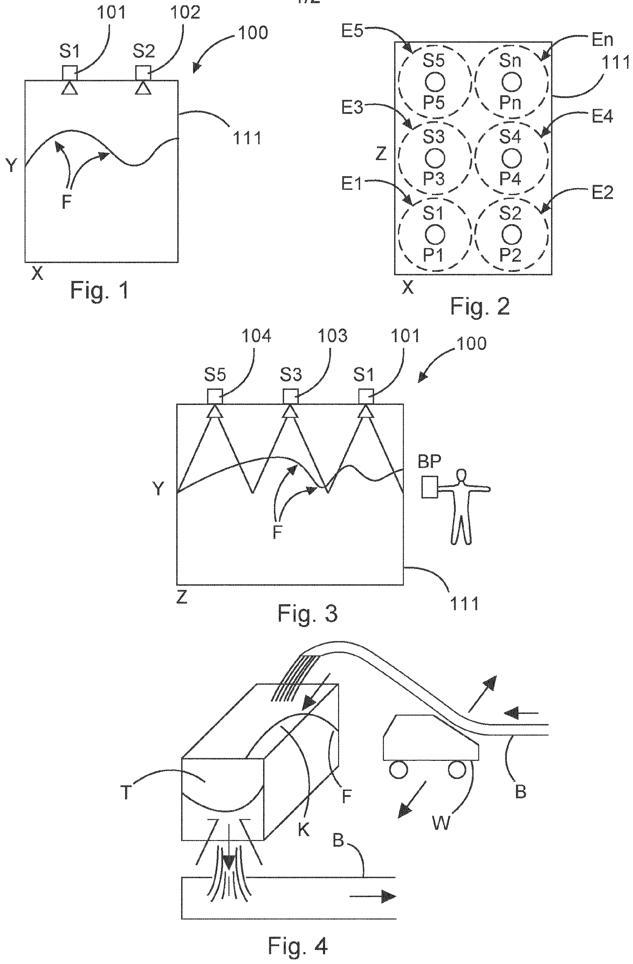

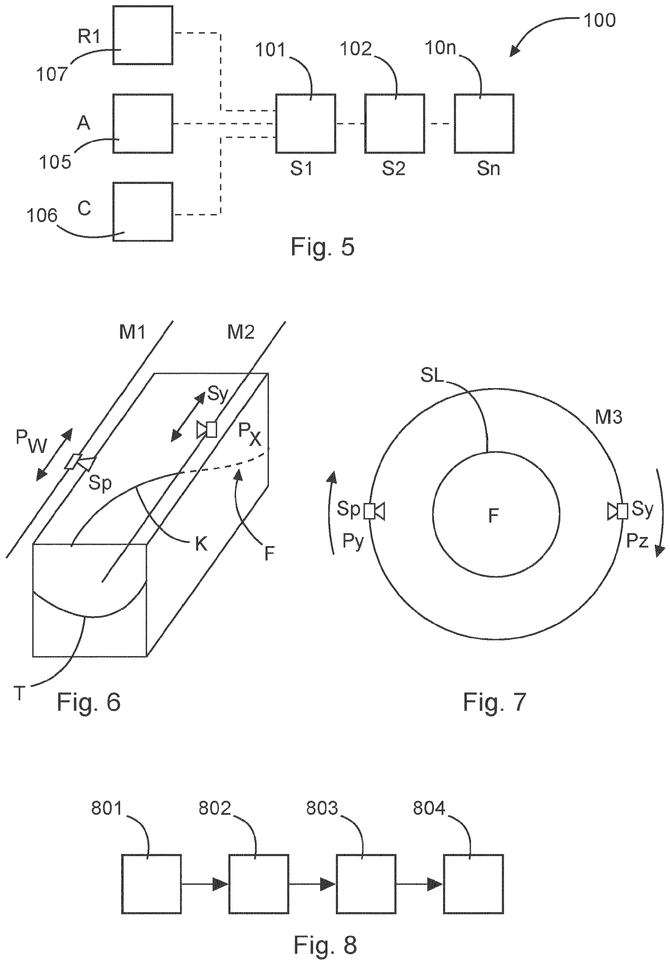

Die Anordnung auf der zu messenden Halde, Silo, Bunker, Behälter ... vom "Primary" 3D-Füllstandmessgerät und den weiteren "Secondary" 3D-Füllstandmessgeräten kann wie folgt aufgebaut sein:
- Nebeneinander, in einem geeigneten Abstand zum optimalen Ausleuchten der zu messenden Struktur, angeordnet, wie dies in den Figuren 1 bis 3 zu sehen ist.
- Auf jeweils einem abgeschlossenen Schienensystem mit beweglichen 3D-Füllstandmessgeräten, die die zu messende Struktur in geeignetem Takt abfahren, wie dies in Figur 6 gezeigt ist.
- Auf einem runden oder ovalen Schienensystem, auf dem 3D-Füllstandmessgeräte die runde oder ovale Struktur in geeignetem Takt abfahren. Siehe Figur 7.

Durch das beschriebene Verfahren kann die Sicherheit zudem erhöht werden. Durch die genaue, vernetzte Messung über den gesamten Messraum werden Ablagerungen an der Behälter- bzw. Haldenwand besser erkannt. Dadurch erhöht sich die Sicherheit in Bezug auf mögliche Gewichtsverlagerung verursacht durch Ablagerungen und dadurch resultierende ungleichmäßige Gewichtsverteilung. Ein Umstürzen, Einknicken, Brechen des Behälters bzw. Silo kann dadurch vermieden werden. Auch ist funktionstechnisch eine bessere Erkennung der Ablagerungen (Störechos) und eine Erkennung einer Kernflussentstehung, die typischerweise beim Abtragen vom Material vorkommen kann, möglich. Dies dient der rechtzeitigen Vermeidung von Schachtbildungen beim Abfluss. Außerdem wird die Anlagensicherheit, und -verfügbarkeit mit Schutz für Mensch und Umwelt verbessert, insbesondere durch zusätzliche Silo-, Behälter-, Bunker- oder Haldendiagnoseinformationen im Sinne einer vorbeugenden Wartung zur Problemerkennung und -vermeidung.

Die Berechnung des Gesamtfüllstandes erfolgt je nach Ausführungsform entweder beim "Primary" 3D-Füllstandmessgerät selbst oder in einer nachgeschalteten Steuer-/Controllereinheit (z.B. SPS, PLS, Scada-System, Regelprogramm...) oder zentral cloudbasiert auf einem übergeordneten Server.

Dabei können die 3D-Füllstandmessgeräte entweder verdrahtet über eine externe Spannungsversorgung (z.B. 4 ... 20mA/HART, Profibus PA, FF, APL ...) genutzt werden, über die die 3D-Füllstandmessgeräte auch untereinander kommunizieren (z.B. HART, Profibus PA, FF, APL ...). Alternativ können die 3D-Füllstandmessgeräte autark aufgebaut werden, versorgt über vor Ort Batteriekonzepte. Hierbei können weitere dazugehörende Komponenten, wie interne Gleichrichter, Solarpanel ... hinzukommen.

Die Kommunikation der 3D-Füllstandmessgeräte untereinander und ggf. mit übergeordneten Systemen erfolgt bei dieser Option drahtlos über geeignete Funksysteme (z.B. Bluetooth, Wifi, LoRa, NB-loT...). Alternativ kann auch ein Mischbetrieb eine weitere Option sein. Bei einer Mischbetriebs-Option kann das "Primary" 3D-Füllstandmessgerät beispielsweise mit dem übergeordneten System verkabelt sein und die "n" "Secondary" 3D-Füllstandmessgeräte als autarke Lösung aufgebaut sein. In dieser Ausführung kann der Verdrahtungsaufwand limitiert werden.

Ein Positionssensor (z.B. GPS, Triangulationsverfahren bei NB-loT, ...) hilft dem Auswertsystem, die Position mit dem Füllstand automatisiert zu verknüpfen. Ansonsten sollte die Position der 3D-Füllstandmessgeräte manuell in dem System hinterlegt werden. Das Hinterlegen der Position des jeweiligen 3D-Füllstandmessgeräte kann auch halbautomatisiert z.B. mittels Smartphone, Tablet, Smartwatch, Datenbrille vor Ort am 3D-Füllstandmessgerät eingegeben werden. Die Sensoren können vor Ort mittels Bedien- und Visualisierungsprogramme (z.B. APP mittels Tablet/Smartphone/Smartwatch oder Datenbrille bzw. auch mittels DTM und Tablet/PC/Laptop) bedient werden. "Bedienung" bedeutet in diesem Zusammenhang Parametrierung, Diagnostizierung und Visualisierung der Parameter bzw. Variablen.

Ausführungsformen der vorliegenden Offenbarung ermöglichen:
- Eine Füllstandsmessung mit höherer Genauigkeit durch 3D-Vermessung in großen Behältern oder Halden.
- Eine Vernetzung von 3D-Füllstandmessgeräten, vorzugsweise radarbasierend, um eine größere Füllgutoberfläche messtechnisch abdecken zu können. Dadurch Verringerung der Messfehler, die zu Volumen-/Gesamtinhaltsfehlern führen können.
- Die Messung der gesamten Halde ist für den Kunden sofort ersichtlich, keine weiteren Erklärungen notwendig.
- Abbrechende Schüttgutkegel oder Abzugstrichter, die eine plötzliche Veränderung über eine größere Messwertoberfläche verursachen können, werden mittels einer 3D-Füllstandmessgerät Anordnung besser vermessen und erkannt.
- Die Nutzung vom "Primary" und "Secondary"-Anordnungen, um aus einem 3D-Füllstandmessgerät ein 3D-Füllstandmessgeräte-Array aufzubauen mit dem Nutzen des Erhalts einer Gesamtfüllstandinformation.
- Optionale Berechnung des Gesamtergebnisses (3 mögliche Szenarien):
   1. Vor Ort direkt am "Primary" Füllstandsensor. Damit sind keine weiteren externen Steuer-/Controleinheiten (nachgeschaltete Systeme wie SPS, PLS oder Cloud-Strukturen) notwendig.
   2. Anlagenweit mittels nachgelagertem Steuer-/Controllersystem (wie z.B. SPS, PLS, Scada-System ...) durch Vernetzung eines "Primary" 3D-Füllstandmessgerätes mit der jeweils untergelagerten "Secondary" 3D-Füllstandmessgeräte-Struktur oder auch mehrere andere "Primary" 3D-Füllstandmessgeräte mit jeweils untergelagerter "Secondary" 3D-Füllstandmessgeräte-Struktur in der gleichen Anlage / Betrieb mit dem für alle Messungen zentral nachgelagertem Steuer-/Controlsystem (wie z.B. SPS, PLS, Scada-System ...).
   3. Global durch Vernetzung von einem oder mehreren, weltweit eingesetzten "Primary" 3D-Füllstandmessgeräten mit jeweils untergelagerter "Secondary" 3D-Füllstandmessgeräte-Struktur, die über verkabelte Ethernet-Strukturen oder drahtlos über LoRa mit entsprechendem LoRa-Gateway oder über NB-loT mit der überlagerten Cloud serverbasierend, kommunizieren.
- Einen flexiblen, effizienten Aufbau. Je nach Bedarf und Größe der zu messenden Halde mit einem "Primary" 3D-Füllstandmessgerät und "n" "Secondary" 3D-Füllstandmessgerät(e). Erweiterungen (n+1) sind einfach möglich.
- Der "Primary" 3D-Füllstandsenor erhält die Messwerte und Diagnoseinformationen der einzelnen "Secondary" 3D-Füllstandmessgeräte, kann aber auch Steuerinformationen an die einzelnen 3D-Füllstandmessgerät(e) senden.
- Ein 3D-Füllstandsensor steuert die gesamte Anordnung bezogen auf den zeitlichen Ablauf, aber auch in Hinblick auf die Notwendigkeit aller oder Teile der Messwerte und aller oder Teile der Diagnoseinformationen der einzelnen "Secondary" 3 D-Füllstandmessgeräte.
- Ein 3D-Füllstandmessgerät kann, um eine einfache Lagerhaltung zu gewährleisten und die Versionsvielfalt zu reduzieren, als "Primary" oder "Secondary" durch entsprechende Bedienprogramme parametriert werden. Es werden keine zwei unterschiedlichen Geräte, für den "Primary" und "Secondary" Betrieb, benötigt.
- Das für dieses Verfahren primäre Messprinzip ist das Radarmessprinzip. Alternativ können auch andere Verfahren verwendet werden, wie Geführtes Radar, Ultraschall oder Lasersensoren.
- Bei der mit Kabel vernetzten Option (keine autarken Sensoren) kann der "Primary" 3D-Füllstandmessgerät alle angeschlossenen "Secondary" 3D-Füllstandmessgeräte mit Energie versorgen. Einfache 2-Leiter Spannungsversorgungsbusstruktur aller Sensoren im Netzwerk.
- "Secondary" 3D-Füllstandmessgeräte senden die Messwerte und/oder Diagnoseinformationen selbstständig nach vorgegebenen zeitgesteuerten oder eventgesteuerten Ereignissen. Alternativ kann der "Primary" 3D-Füllstandsensorm gezielt die einzelnen "Secondary" 3D-Füllstandmessgeräte auffordern, die Messwerte und Diagnoseinformationen zu schicken.
- Als Messwert kann bei 3D-Füllstandmessgeräten auch die 3D-Punktewolke (erfasst durch entsprechende Echokurvenauswertung) bezeichnet werden. Diese kann unter Berücksichtigung der benachbarten 3D-Punktewolken, je nach Auswerte-/Berechnungsoption des "Primary" 3D-Füllstandmessgerätes, vom Steuer-/Controlsystem oder der cloudbasierte Serverlösung, ausgewertet werden um das sensorübergreifende Gesamtergebnis (z.B. Gesamtvolumen) darzustellen bzw. weiterzugeben.
- Positionsermittlung, wie z.B. mittels GPS hilft, den Messwert eines bestimmten 3D-Füllstandmessgerätes einer konkreten geografischen Position zuzuordnen.
- Insbesondere zukünftige vernetzte Lösungen mit hoher Datengeschwindigkeit, wie zum Beispiel das Zweidraht-Ethernet APL (Advanced Physical Layer), können das Verfahren in Hinblick auf technische Gegebenheiten wie Übertragungsgeschwindigkeit, zeitgemäße Ethernet-basierte Lösung und standardisiertes Bussystem für Prozess- und Fabrikautomation unterstützen.
- Erhöhte Sicherheit wird durch eine genaue, vernetzte Messung über den gesamten Messraum dadurch gegeben, dass Ablagerungen an der Behälter- bzw. Haldenwand besser und genauer erkannt werden. Dies bedeutet Sicherheit durch Erkennung von Gewichtsverlagerung, verursacht durch Ablagerungen und dadurch resultierende ungleichmäßige Gewichtsverteilung, Sicherheit durch bessere Erkennung der Ablagerungen (Störechos), Sicherheit durch Erkennung von Kernfluss beim Abtragen vom Material zum rechtzeitigen Vermeiden von Schachtbildungen beim Abfluss, Anlagensicherheit, und -verfügbarkeit mit Schutz für Mensch und Umwelt und zusätzliche Silo-, Behälter-, Bunker- oder Haldendiagnose zwecks vorbeugender Wartung und Problemvermeidung.

Die vorliegende Offenbarung beschreibt ein Verfahren mittels einer Vielzahl an 3D-Füllstandmessgeräten, die als "Primary" und "Secondary" 3D-Füllstandmessgeräte untereinander vernetzt sind, um höhere Genauigkeiten und höhere Sicherheit bei der Füllstandsmessung von großen Behältern bzw. Haldenmessungen zu bieten. Die Berechnung des Gesamtfüllstandes sowie durch Linearisierung und Skalierung auch Volumeninhalt erfolgt je nach Option entweder beim "Primary" 3D-Füllstandmessgerät selbst, in einer den Sensoren nachgeschalteten Steuer-/Controlleinheit (z.B. SPS, PLS, Scada-System, Regelprogramm...) oder zukunftsorientiert, zentral und cloudbasiert auf einem übergeordneten Server. Dabei können die 3D-Füllstandmessgeräte entweder über eine externe Spannungsversorgung über die die 3D-Füllstandmessgeräte auch untereinander kommunizieren können (z.B. HART, Profibus PA, FF, APL ...) oder die 3D-Füllstandmessgeräte sind autark aufgebaut und werden über vor Ort Batteriekonzepte versorgt. Die Kommunikation der 3D-Füllstandmessgeräte untereinander und ggf. mit übergeordneten Systemen erfolgt bei der autarken Option über geeignete Funksysteme (z.B. Bluetooth, Wifi, LoRa, NB-IoT ...)

In den folgenden Figuren ist ein großer Behälter bzw. eine Halde, die vermessen wird, gezeigt. Die Abmessungen der Halde werden mit x, y und z dargestellt. Die Abmessungen sind in der Regel als groß zu bewerten. In Bild 1, 2 und 3 vereinfacht gezeichnet das Abbild einer Halde in drei Ansichten (Draufsicht, Frontsicht und Seitensicht) die mit mehreren 3D-Füllstandmessgeräten, um effizient alle Zonen hinreichend gut auszuleuchten, ausgestattet ist. In diesem Beispiel werden insgesamt sechs 3D-Füllstandmessgeräte (ein "Primary" Sensor S1 und fünf "Secondary" Sensoren S2 ... Sn) verwendet.

Fig. 1 zeigt die Vorderansicht der zu messenden Halde 111 mit eingebauter, sichtbaren 3D-Füllstandsmesstechnik S1, 101, und S2, 102. Dabei ist S1 die "Primary" 3D-Füllstandsmesstechnik und "S2" einer der in diesem Beispiel gezeigten fünf "Secondary" 3D-Füllstandsensoren, der in dieser Ansicht sichtbar ist. Ein Füllgut F mit dessen unregelmäßigen Füllgutoberflächentopologie wird ebenfalls gezeigt. Man erkennt durch die unregelmäßige Füllgutoberfläche die unterschiedlichen Niveaus an den unterschiedlichen Stellen.

Fig. 2 zeigt eine Draufsicht der zu messenden Halde. Gezeigt wird S1 als "Primary" 3D-Füllstandsmesstechniksensor sowie die anderen fünf "Secondary" 3D-Füllstandsmesstechniksensoren S2 ... Sn, die in diesem Beispiel gezeigt werden, um die Halde bestmöglich auszuleuchten. Die jeweiligen Ausleuchtungszonen E1 ... En der jeweiligen 3D-Füllstandsmesstechnik S1 ... Sn werden rund um die Position der jeweiligen 3D-Füllstandsmesstechnik P1 ... Pn gestrichelt gezeigt. Die Ausleuchtungszonen der jeweiligen 3D-Füllstandmesstechniken, die im Idealfall rund aber in der Regel eher oval sind, können sich ebenfalls überlappen. Diese Überlappung wird in der Berechnung des Gesamtfüllstandes in der Steuereinheit, "Primary" 3D-Füllstandmessgerät, in einer den Sensoren nachgeschalteten Steuer-/Controlleinheit (z.B. SPS, PLS, Scada-System, Regelprogramm...) oder cloudbasiert auf einem übergeordneten Server, berücksichtigt. Man erkennt dadurch die optimalere Ausleuchtung der Halde.

Fig. 3 zeigt eine Seitenansicht der zu messenden Halde. Gezeigt werden die von dieser Seitenansicht (links) zu sehenden 3D-Füllstandmessgeräte S1 als "Primary" 3D-Füllstandsmesstechniksensor sowie zwei andere S3 und S5 "Secondary" 3D-Füllstandmessgeräte.

Ein Füllgut "F" mit dessen unregelmäßige Füllgutoberflächentopologie und verschiedene sichtbare Schüttgutkegelbildungen, ist hier zusätzlich gezeigt.

Des Weiteren wird hier ein Bediener / Servicetechniker BD dargestellt, der mittels Bedien- und Visualisierungsprogramm BD die 3D-Füllstandmessgeräte bedienen kann. Bedienen bedeutet in diesem Zusammenhang Parametrieren, Diagnostizieren und Visualisieren der Parameter und Variablen der unterschiedlichen 3D-Füllstandmessgeräte S1 ... Sn.

Fig. 4 zeigt ein Beispiel eines entstandenen Einfüllkegels K und Auslasstrichter T der beim Befüllen bzw. Abtragen des Füllguts F entstehen kann. Beim Einfüllvorgang kann dies beispielsweise durch einen mobilen Einfüllstutzen resultieren. Der Einfüllstutzen wird, gespeist von mobilen Förderbändern B die die Halde längs abfahren, so bewegt, dass das Füllgut F über den gesamten Bereich eingefüllt werden kann. Dies kann durch Unregelmäßigkeiten (Füllgutmenge, zeitlicher Ablauf), zu unterschiedlichen Einfüllkegeln führen.

Beim Auslass des Füllguts können sogenannte Auslasstrichter T entstehen die durch Abtragen vom Füllgut verursacht werden können. Das abgetragene Füllgut kann dann wiederum durch Förderbänder B, die mit unterschiedlichen Geschwindigkeiten betrieben werden, derartige Trichter verursachen. Die Verwendung von mehreren 3D-Füllstandsmesstechnikgeräten zur optimalen Ausleuchtung insbesondere bei derartigen Auslasstrichtern und Einfüllkegeln, helfen die Messung genauer zu machen.

Fig. 5 zeigt ein Füllstandmesssystem 100 und verdeutlicht die Abfolge des Verfahrens.
- S1:: "Primary" 3D-Füllstandmessgerät 101.
- S2:: Erstes "Secondary" 3D-Füllstandmessgerät 102, angeschlossen und versorgt durch S1.
- Sn:: n-tes "Secondary" 3D-Füllstandmessgerät 10n, angeschlossen und versorgt durch benachbarte "Secondary" 2D-Füllstandmessgeräte die letztendlich an S1 melden.
- R1:: Recheneinheit 107 vom "Primary" 3D-Füllstandmessgerät S1, welche vor Ort die Berechnung des Gesamtfüllstandes bzw. Gesamtvolumen vornimmt. In der Regel ist die Recheneinheit R1 im gleichen Gehäuse zu finden wie der "Primary" 3D-Füllstandmessgerät S1. In Ausnahmefällen kann diese auch in einem ausgelagerten Gehäuse vorhanden sein. Diese verarbeiten, visualisieren oder leiten den errechneten Wert (z.B. aktuelles Gesamtvolumen des Schüttguts auf der Halde) an Drittsysteme (Displays, Smartphones/ Tablets/ Smartwatch/ Datenbrille, anderer Controller, ERP-Systeme ...) weiter.
- A: Nachgeschaltete Auswerteeinheit 105, z.B. Steuer-/Controllereinheit (SPS, PLS, Scada-System ...), die die Berechnung vom Gesamtfüllstand bzw. Gesamtvolumen vornimmt. In der Regel ist die nachgeschaltete Auswerteinheit über drahtgebundene Systeme, wie z.B. 4 ... 20mA/HART, Profibus PA, FF oder APL ..., an dem "Primary" 3D-Füllstandmessgerät S1 geschaltet. Hier werden die Messdaten, Diagnosedaten zur externen Berechnung übergeben. Diese verarbeiten, visualisieren oder leiten den errechneten Wert (z.B. aktuelles Gesamtvolumen des Schüttguts auf der Halde) an Drittsysteme (Displays, Smartphones/ Tablets/Smartwatch/Datenbrille, andere Controller, ERP-Systeme ...) weiter.
- C: Nachgeschaltete übergeordnete Auswerteeinheit 106, z.B. ein Cloud/Server System der die Berechnung des Gesamtfüllstandes bzw. Gesamtvolumen vornimmt. In der Regel ist die nachgeschaltete Auswerteinheit an dem "Primary" 3D-Füllstandmessgerät "S1" über firmenweite Netzwerkstrukturen z.B. Ethernet-Netzwerk oder drahtlose Kommunikationssysteme wie z.B. LoRa, NB-IoT ... geschaltet. Dieser übergibt die Messdaten, Diagnosedaten zur externen Berechnung. Die Cloud verarbeitet, visualisiert oder leitet den errechneten Wert (z.B. aktuelles Gesamtvolumen des Schüttguts auf der Halde) an Drittsysteme (Displays, Smartphones/Tablets/ Smartwatch/Datenbrille, anderer Controller, ERP-Systeme) weiter.

Fig. 6 zeigt einen länglichen Bunker oder eine Halde, an dem zwei Schienen M1 und M2 angebracht sind. Auf diesen Schienen fahren 3D-Füllstandmessgeräte nach geeignetem Zeittakt hin und her.

Auf der Schiene M1 befindet sich der "Primary" 3D-Füllstandmessgerät Sp in der aktuellen Position Pw. Auf Schiene M2 befindet sich in diesem Beispiel ein "Secondary" 3D-Füllstandmessgerät Sy in der aktuellen Position Px. Bei diesem Beispiel zeigen sich im Füllgut F ebenfalls entstandene Einfüllkegel K und Auslasstrichter T der beim Befüllen bzw. Abtragen des Füllguts F entstehen kann. Zweck der Anordnung, ebenfalls die optimale Ausleuchtung der Halde.

Fig. 7 zeigt eine Draufsicht auf einen zu messenden großen, kreisförmigen oder ovalen Silos SL mit Füllgut F. Gezeigt wird ein "Primary" 3D-Füllstandmessgerät Sp in aktueller Position Py, sowie in diesem Beispiel ein weiterer "Secondary" 3D-Füllstandmessgerät Sy in aktueller Position Pz. Die Füllstandmessgeräte befinden sich in einer kreisförmigen Bewegung auf Schiene M3. Zweck der Anordnung, ebenfalls die optimalere Ausleuchtung des Silos.

Fig. 8 zeigt ein Flussdiagramm eines Verfahrens gemäß einer Ausführungsform, zur 3D-Füllstandmessung oder Topologiemessung in einem großen Behälter oder einer Schüttguthalde. In Schritt 801 erfolgt das Erfassen von 3D-Füllstandmessdaten in einem ersten Bereich durch einen ersten 3D-Füllstandsensor. In Schritt 802 erfolgt das Erfassen von 3D-Füllstandmessdaten in mindestens einem zweiten Bereich durch mindestens einen zweiten 3D-Füllstandsensor. In Schritt 803 wird der Überlapp der beiden Bereiche bestimmt und in Schritt 804 dann ein Stitching-Verfahren angewendet, um dann die Topologie der Füllgutoberfläche aus den erfassten 3D-Füllstandmessdaten des ersten Bereichs und des mindestens einen zweiten Bereichs zu berechnen.

Unter dem Begriff "Prozessautomatisierung", insbesondere im industriellen Umfeld, kann ein Teilgebiet der Technik verstanden werden, welches Maßnahmen zum Betrieb von Maschinen und Anlagen ohne Mitwirkung des Menschen beinhaltet. Ein Ziel der Prozessautomatisierung ist es, das Zusammenspiel einzelner Komponenten einer Werksanlage in den Bereichen Chemie, Lebensmittel, Pharma, Erdöl, Papier, Zement, Schifffahrt oder Bergbau zu automatisieren. Hierzu können eine Vielzahl an Sensoren eingesetzt werden, welche insbesondere an die spezifischen Anforderungen der Prozessindustrie, wie bspw. mechanische Stabilität, Unempfindlichkeit gegenüber Verschmutzung, extremen Temperaturen und extremen Drücken, angepasst sind. Messwerte dieser Sensoren werden üblicherweise an eine Leitwarte übermittelt, in welcher Prozessparameter wie Füllstand, Grenzstand, Durchfluss, Druck oder Dichte überwacht und Einstellungen für die gesamte Werksanlage manuell oder automatisiert verändert werden können.

Ein Teilgebiet der Prozessautomatisierung im industriellen Umfeld betrifft die Logistikautomation von Anlagen und die Logistikautomation von Lieferketten. Mit Hilfe von Distanz- und Winkelsensoren werden im Bereich der Logistikautomation Abläufe innerhalb oder außerhalb eines Gebäudes oder innerhalb einer einzelnen Logistikanlage automatisiert. Typische Anwendungen finden z.B. Systeme zur Logistikautomation im Bereich der Gepäck- und Frachtabfertigung an Flughäfen, im Bereich der Verkehrsüberwachung (Mautsysteme), im Handel, der Paketdistribution oder aber auch im Bereich der Gebäudesicherung (Zutrittskontrolle). Gemein ist den zuvor aufgezählten Beispielen, dass eine Präsenzerkennung in Kombination mit einer genauen Vermessung der Größe und der Lage eines Objektes von der jeweiligen Anwendungsseite gefordert wird. Hierfür können Sensoren auf Basis optischer Messverfahren mittels Laser, LED, 2D-Kameras oder 3D-Kameras, die nach dem Laufzeitprinzip (time of flight, ToF) Abstände erfassen, verwendet werden.

Ein weiteres Teilgebiet der Prozessautomatisierung im industriellen Umfeld betrifft die Fabrik-/Fertigungsautomation. Anwendungsfälle hierzu finden sich in den unterschiedlichsten Branchen wie Automobilherstellung, Nahrungsmittelherstellung, Pharmaindustrie oder allgemein im Bereich der Verpackung. Ziel der Fabrikautomation ist, die Herstellung von Gütern durch Maschinen, Fertigungslinien und/oder Roboter zu automatisieren, d. h. ohne Mitwirkung des Menschen ablaufen zu lassen. Die hierbei verwendeten Sensoren und spezifischen Anforderungen im Hinblick auf die Messgenauigkeit bei der Erfassung der Lage und Größe eines Objektes sind mit denen der im vorigen Beispiel der Logistikautomation vergleichbar.

Ergänzend sei darauf hingewiesen, dass "umfassend" und "aufweisend" keine anderen Elemente oder Schritte ausschließt und die unbestimmten Artikel "eine" oder "ein" keine Vielzahl ausschließen. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

### Bezugszeichenliste

- S1, 101: 3D-Füllstandmessgerät, als "Primary" Sensor im Gerätenetzwerk agierend
- S2, 102 ... Sn: 3D-Füllstandmessgerät mit Nr. 2 ... n, als "Secondary" Sensor im Gerätenetzwerk agierend
- Sp: "Primary" 3D-Füllstandmessgerät in Fig. 6 und Fig. 7
- Sy: "Secondary" 3D-Füllstandmessgerät in Fig. 6 und Fig. 7
- SL: Silo in Fig. 7
- P1 ... Pn: Position des jeweiligen 3D-Füllstandmessgeräts innerhalb der Anordnung
- Pw: Position des "Primary" 3D-Füllstandmessgeräts in Fig. 6
- Px: Position des "Secondary" 3D-Füllstandmessgerät in Fig. 6
- Py: Position des "Primary" 3D-Füllstandmessgerät in Fig. 7
- Pz: Position des "Secondary" 3D-Füllstandmessgerät in Fig. 7
- R1, 107: Recheneinheit vom Primary 3D-Füllstandmessgerät "S1"
- A, 105: Nachgeschaltete Steuer-/Controlleinheit (z.B. SPS, PLS, Scada-System ...)
- C, 106: Nachgeschaltete übergeordnete Auswerteeinheit z.B. Cloud/Server Struktur
- BD: Bediener / Servicetechniker vor Ort in der Anlage
- BP: Bedien- und Visualisierungsprogramm (z.B. APP mittels Tablet/Smartphone/Smartwatch/Datenbrille oder DTM mittels Tablet/PC/Laptop) - Parametrierung, Diagnose und Visualisierung
- T: Auslasstrichter / Schüttguttrichter, der beim Ablassen vom Füllgut entstehen kann
- F: Füllgut mit Skizzierung der unregelmäßigen Füllgutoberfläche (Topologie)
- K: Einfüllkegel / Schüttgutkegel, der beim Einlassen vom Füllgut entstehen kann
- B: Förderband zum Eintragen und Abtragen vom Füllgut/Material/Schüttgut in oder aus der Halde
- W: Förderwagen zum Positionieren des Eintragsstutzen zur Materialbefüllung
- F1 ... Fn: Füllstand an einer bestimmten Position 1 ... n
- E1 ... En: Echokurvenbereich bzw. 3D-Punktwolke für das jeweiligen 3D-Füllstandmessgerät 1 ... n resultierend aus dem jeweiligen Echosignal vom 3D-Füllstandmessgerät
- x: Dimension der Halde bzw. Messbereich x-Achse (entsprechend Breite)
- y: Dimension der Halde bzw. Messbereich y-Achse (entsprechend Höhe)
- z: Dimension der Halde bzw. Messbereich x-Achse (entsprechend Tiefe)
- M1: Schienensystem 1 in Fig. 6
- M2: Schienensystem 2 in Fig. 6
- M3: Schienensystem 3 in Fig. 7

## Patentansprüche

1. Verfahren zur 3D-Füllstandmessung oder Topologiemessung in einem Behälter oder einer Schüttguthalde, aufweisend die Schritte:
Erfassen von 3D-Füllstandmessdaten in einem ersten Bereich durch einen ersten 3D-Füllstandsensor (101);
Erfassen von 3D-Füllstandmessdaten in mindestens einem zweiten Bereich durch mindestens einen zweiten 3D-Füllstandsensor (102, 103, 104);
Berechnen der Topologie der Füllgutoberfläche aus den erfassten 3D-Füllstandmessdaten des ersten Bereichs und des mindestens einen zweiten Bereichs.

2. Verfahren nach Anspruch 1,
wobei der erste Bereich und der zweite Bereich überlappen.

3. Verfahren nach einem der vorhergehenden Ansprüche,
wobei das Berechnen der Topologie der Füllgutoberfläche ganz oder teilweise durch den ersten 3D-Füllstandsensor (101) erfolgt.

4. Verfahren nach einem der Ansprüche,
wobei das Berechnen der Topologie der Füllgutoberfläche ganz oder teilweise durch eine nachgeschaltete Steuereinheit (105) erfolgt, an die der erste 3D-Füllstandsensor (101) angeschlossen ist.

5. Verfahren nach einem der vorhergehenden Ansprüche,
wobei das Berechnen der Topologie der Füllgutoberfläche ganz oder teilweise durch eine Cloud (106) erfolgt.

6. Verfahren nach einem der vorhergehenden Ansprüche, weiter aufweisend den Schritt:
Erkennen einer Kernflussentstehung durch Analyse der Topologie.

7. Verfahren nach einem der vorhergehenden Ansprüche,
wobei der erste und/oder der mindestens eine zweite 3D-Füllstandsensor (101, 102, 103, 104) ein autarker Sensor mit eigener Energieversorgung und drahtloser Kommunikationsschnittstelle ist.

8. Verfahren nach einem der vorhergehenden Ansprüche, weiter aufweisend den Schritt:
Messen der Position des ersten und/oder des mindestens einen zweiten 3D-Füllstandsensors (101, 102, 103, 104) relativ zueinander und relativ zum Behälter.

9. Verfahren nach einem der vorhergehenden Ansprüche, weiter aufweisend den Schritt:
Verfahren des ersten und/oder des mindestens einen zweiten 3D-Füllstandsensors (101, 102, 103, 104) während der Topologiemessung oder der 3D-Füllstandmessung.

10. 3D-Füllstandsensor (101, 102, 103, 104) zur 3D-Füllstandmessung oder Topologiemessung in einem großen Behälter oder einer Schüttguthalde, eingerichtet zur Durchführung eines Verfahrens nach einem der vorhergehenden Ansprüche.

11. 3D-Füllstandsensor (101, 102, 103, 104) nach Anspruch 10, ausgeführt als Radarsensor, Ultraschallsensor oder Lasersensor.

12. Füllstandmesssystem (100) zur 3D-Füllstandmessung oder Topologiemessung in einem großen Behälter oder einer Schüttguthalde, aufweisend eine Vielzahl an 3D-Füllstandsensoren (101, 102, 103) nach einem der Ansprüche 10 oder 11.

13. Programmelement, das, wenn es auf einem Prozessor (107) eines Füllstandmesssystems (100) ausgeführt wird, das Füllstandmesssystem dazu veranlasst, das Verfahren nach einem der Ansprüche 1 bis 9 durchzuführen.

14. Computerlesbares Medium, auf dem ein Programmelement nach Anspruch 13 gespeichert ist.
